# EUROPEAN PATENT APPLICATION

(11) **EP 0 658 602 A1**
(43) Date of publication of application: **21.06.1995**
(21) Application number: 94309156.1
(22) Date of filing: 08.12.1994
(51) Int. Cl.: C08L 77/00, C08L 71/12

(54) **Thermoplastic resin composition**

(30) Priority: 08.12.1993 JP 308030/93
(71) Applicant: SUMITOMO CHEMICAL COMPANY, LIMITED, Osaka (JP)
(72) Inventor: Suzuki, Yasuro, Kisarazu-shi, Chiba-ken (JP); Ijichi, Yasuhito, Ichihara-shi, Chiba-ken (JP)
(74) Representative: Woods, Geoffrey Corlett

(57) **Abstract**

A thermoplastic resin composition comprising, (A) 5-90 parts by weight of a polyphenylene ether resin and (B) 95-10 parts by weight of a polyamide resin, and per 100 parts by weight of the sum of (A) and (B), (C) 0.01-30 parts by weight of a mutual compatibilizer, (D) 0.1-100 parts by weight of a plasticizer which gives elasticity to the polyamide and (E) 0-100 parts by weight of a rubber-like material.

## Description

### FIELD OF THE INVENTION

The present invention relates to a thermoplastic resin composition comprising a polyphenylene ether resin and a polyamide resin. More particulary, the invention relates to a thermoplastic resin composition comprising a polyphenylene ether resin and a polyamide resin which has an elasticity and a high tensile strength simultaneously.

### BACKGROUND OF THE INVENTION

A polyphenylene ether resin (PPE resin) is a thermoplastic resin with various characteristics such as an excellent mechanical property, an excellent thermal resistance and an excellent dimensional stability. But an impact resistance and a solvent resistance of PPE resin alone are extremely poor and a processability is poor because of its high melt viscosity. On the other hand, a polyamide resin is a thermoplastic resin with characteristics of an excellent mechanical property, a solvent resistance and a processability, but its impact resistance and thermal resistance are poor, and furthermore, a dimensional stability is remarkably poor owing to its high water absorption, and the decrease of mechanical property is severe owing to its water absorption. Blending both of them is proposed to make up for defects of these resins. But a good mechanical property which both resins have is lost by only simply blending. It is contrived that the improvements of dispersibility and a mechanical property are attained by addition of various mutual compatibilizers at the blend of a PPE resin with a polyamide resin. These methods are illustrated in Japanese Patent Publication (Koukoku) NO. 60-11966, Japanese Patent Publication (Koukoku) NO. 61-10494, Japanese Patent Publication (Koukai) NO. 59-66452 and Japanese Patent Publication (Koukai) NO. 56-49753.
Thus obtained PPE / polyamide resin compositions are being applied to an electrical and an electronics field and a car field as materials with excellent mechanical property, thermal resistance, solvent resistance, processability, dimensional stability and water absorption property. However, PPE/polyamide resin composition has a problem that rigidity is comparatively high and it is difficult to meet with uses demanded for elasticity. Although it has been tried to decrease a rigidity by blending of rubber-like materials, there occurs problems that a tensile strength decrease simultaneously with the decrease of a rigidity by blending of rubber-like mateials and a flowability at processing also decreases, therefore, its applicable range has been restricted.

### SUMMARY OF THE INVENTION

The purpose of the present invention is to solve these problems to provide a thermoplastic resin composition comprising a polyphenylene ether resin and a polyamide resin with a low rigidity, a high tensile strength, and an excellent melt flowability.

As the result of the inventor's intensive researches and invesigations on these circumstances, the present inventors found out that materials which keep a high tensile strength and have a low rigidity were obtained by adding a specified plasticizer to a resin composition comprising a polyphenylene ether resin and a polyamide resin, and attained the present invention.

That is, the present invention relates to a thermoplastic resin composition comprising, (A) 5-90 parts by weight of a polyphenylene ether resin and (B) 95-10 parts by weight of a polyamide resin, and per 100 parts by weight of the sum of (A) and (B), (C) 0.01-30 parts by weight of a mutual compatibilizer, (D) 0.1-100 parts by weight of a plasticizer which gives an elasticity to the polyamide and (E) 0-100 parts by weight of a rubber-like material.

### DETAILED DESCRIPTION OF THE INVENTION

The present invention will now be described in detail below.

A polyphenylene ether resin (A) used in the present invention is a polymer which is obtained by oxidative polymerization of at least one phenol compound represented by the formula (1) (wherein R₁, R₂, R₃, R₄ and R₅ represent a hydrogen, a halogen atom, a substituted or unsubstituted hydrocarbon residue, with a proviso that at least one of them is a hydrogen atom.) with oxygen or oxygen-containing gas and oxidative coupling catalyst. 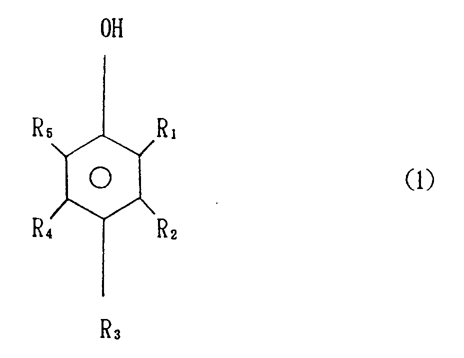
The examples of R₁, R₂, R₃, R₄ and R₅ in above-mentioned formula (1) include a hydrogen atom, a chlorine atom, a bromine atom, a fluorine atom, an iodine atom, a methyl group, an ethyl group, a n- or iso-propyl group, a pri-, sec- or t-butyl group, a chloroethyl group, a hydroxyethyl group, a phenylethyl group, a benzyl group, a hydroxymethyl group, a carboxyethyl group, a methoxycarbonylethyl group, a cyanoethyl group, a phenyl group, a chlorophenyl group, a methylphenyl group, a dimethylphenyl group, an ethylphenyl group and an allyl group.

The examples of above-mentioned formula (1) include phenol, o-, m-, or p-cresol, 2.6-, 2.5-, 2.4- or 3, 5-dimethylphenol, 2-methyl-6-phenylphenol, 2,6-diphenylphenol, 2,6-diethylphenol, 2-methyl-6-ethylphenol, 2,3,5-, 2,3, 6- or 2,4,6- trimethylphenol, 3-methyl-6-t-butylphenol, thymol and 2-methyl-6-allylphenol. Alternatively, copolymer of any of the phenol compound listed above and the other phenol compound, for example, polyhydroxy aromatic compound such as bisphenol A, tetrabromobisphenol A, resorcin, hydroquinone and novolack resin may be employed.

Preferable polymers among these compounds are homopolymers of 2,6-dimethylphenol or 2,6-diphenylphenol and copolymers of a large amount of 2,6-xylenol with a small amount of 3-methyl-6-t-butylphenol or of 2,3,6-trimethylphenol.
Any oxidative coupling catalyst may be employed for oxydative polymerization of phenol compound, as long as it has polymerization ability.
This preparing method of a polyphenylene ether resin is illustrated in, for example, the specifications of the United State Patents NO. 3306874, NO. 3306875, NO. 3257357 and Japanese Patent Publications (Koukoku) NO. 52-17880 and (Koukai) NO. 50-51197, (Koukai-Hei) NO. 1-304119.

The examples of (A) the polyphenylene ether resin of the present invention include poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl -1, 4-phenylene ether), poly(2,6-butyl-1,4-phenylene ether), poly(2,6-dipropenyl-1,4-phenylene ether), poly(2,6-dilauryl-1,4-phenylene ether), poly(2,6-diphenyl-1,4-phenylene ether), poly(2,6-dimethoxy-1,4-phenylene ether), poly(2,6-diethoxy-1,4-phenylene ether), poly(2-methoxy-6-ethoxy-1,4-phenylene ether). poly(2-ethyl-6-stearyloxy-1,4-phenylene ether), poly(2-methyl-6-phenyl-1,4-phenylene ether), poly(2-methyl-1,4-phenylene ether), poly(2-ethoxy-1,4-phenylene ether), poly(2-chloro-1,4-phenylene ether), poly(3-methyl-6-t-butyl-1,4-phenylene ether), poly(2,6-dichloro-1,4-phenylene ether), poly(2,5-dibromo-1, 4-phenylene ether), poly(2,6-dibenzyl-1,4-phenylene ether), and various copolymers comprising plural kinds of repeating unit which constitute these copolymers.
In copolymers, copolymers of 2,6-dimethylphenol with multi-substituted phenol such as 2,3,6-trimethylphenol and 2,3,5,6-tetramethylphenol are included.

Among these polyphenylene ethers, poly(2,6-dimethyl-1,4-phenylene ether) and the copolymer of 2,6-dimethylphenol with 2,3,6-trimethylphenol are preferred.

The range of a molecular weight of the polyphenylene ether resin which can be used in the present invention cannot be specified indiscriminately because its suitable range depends on the purpose. Generally, the molecular weight represented by an intrinsic viscosity which was measured in chloroform at 30°C is 0.1-0.7 dl/g, preferably 0.2-0.6 dl/g.

Furthermore, the polyphenylene ether resin of the present invention includes modified polymers grafted with styrenic monomer, such as styrene and α-methyl styrene, onto above-mentioned polyphenylene ether resins.

The amount of the grafted styrene resin or its blending amount is 500 parts or less by weight per 100 parts by weight of the polyphenylene ether resin. When it is more than 500 parts by weight, thermal resistance of the thermoplastic resin remarkably decreases and it is not preferred.

A polyamide resin (B) used in the present invention is one polyamide resin or more or mixtures thereof comprising homopolyamides and copolyamides obtained by polymerization of lactams or amino carboxylic acids and polycondensation of diamines with dibasic acids.
For example, nylon 6, nylon 66, nylon 46, nylon 10, nylon 11, nylon 12, nylon MXD6 which is a copolymer of metaxylylenediamine with adipic acid, nylon 66/6 copolymer, copolyamide (nylon AHBA/6) of p-aminomethylbenzoic acid with ε - caprolactam, polyamide mainly composed of 2,2,4-/2,4,4-trimethy lhexamethylenediamine · terephthalic acid salt (nylon THDT, THDT/61) and copolyamide of hexamethylenediamine with mixtures of each ratio of terephthalic acid · isophthalic acid · adipic acid are enumerated but is not restricted by these description.

Blending ratio of (A) the polyphenylene ether resin and (B) the polyamide resin is 5-90 parts by weight of the polyphenylene ether resin per 95-10 parts by weight of the polyamide resin, preferably 10-80 parts by weight of the former per 90-20 parts by weight of the latter, more preferably 20-60 parts by weight of the former per 80-40 parts by weight of the latter.

A mutual compatibilizer (C) of the present invention is a compound which is blended to improve affinity between (A) the polyphenylene ether resin and (B) the polyamide resin and to improve their compatibility. As the mutual compatibilizer, at least one compound selected from the following I-Q groups is preferred.
I : Epoxy compound without ethylenic or acetylenic unsaturated double bond.
J : Compound with (1) at least one unsaturated group having carbon-carbon double bond or carbon-carbon triple bond and (2) at least one polar group.
K : Oxidized polyolefin wax.
L : Silane compound which has both (i) carbon atom linked through oxygen and (ii) at least one functional group selected from an ethylenic carbon-carbon double bond or carbon-carbon triple bond and/or an amino group and a mercapto group, and wherein the fore-mentioned functional group is not linked with silicon atom in molecular structure.
M : Compound which has both (i) (OR) (wherein R is a hydrogen or an alkyl group, an allyl group, an acyl group or a carbonyldioxy group) and (ii) at least two same or different functional groups in the same molecule selected from carboxylic acid, acid halide, acid anhydride, acid ester, acid amide, imide, amino and their salts.
N : Compound which has both (i) acid halide group and (ii) at least one selected from carboxylic acid group, anhydride group, acid amide, imide group, carboxylate group, amino group and hydroxyl group in the same molecule.
O : Copolymer which contains the unit of vinyl aromatic compound and α, β-unsaturated dicarboxylic acid or its anhydride, or copolymer which contains the unit of vinyl aromatic compound and the unit of imide of α, β-unsaturated dicarboxylic acid.
P : Polyphenylene ether functionalized by at least one mutual compatibilizer selected from I-J groups and L-N groups.
Q : Composition which was obtained by melt kneading of small amount of polyamide with polyphenylene ether functionalized by at least one mutual compatibilizer selected from I-O groups.

As the mutual compatibilizer I group of the present invention include (1) a condensation product of polyhydric phenol (for example, bisphenol A, tetrabromobisphenol A, resorcin and the like) with epichlorohydrin and (2) a condensation product of polyhydric alcohol (for example, ethylene glycol, propylene glycol, polyethylene glycol and the like) with epichlorohydrin.

As the mutual compatibilizer J group of the present invention, there is a compound which has in the same molecule unsaturated group, that is, carbon-carbon double bond or carbon-carbon triple bond and a polar group, that is, a functional group which has an affinity and indicates a chemical reactivity with an amide bonding contained in polyamide resin, or carboxyl group and amino group in the chain end.
As these functional groups, carboxylic acid group, its derivative group substituted hydrogen atom or hydroxyl group of carboxylic acid, such as salts, esters, acid amide, acid azide and acid halide, or functional group such as oxazoline and nitrile, epoxy group, amino group, hydroxy group, or isocyanurate group are enumerated.
Compound which has both unsaturated group and polar group, that is, unsaturated carboxylic acid, unsaturated carboxylic acid derivative, unsaturated epoxy compound, unsaturated alcohol, unsaturated amine and unsaturated isocyanurate are used.

For example, maleic acid, maleic anhydride, fumaric acid, maleimide, maleic acid hydrazide and a reaction product of maleic anhydride with diamine enumerated.

And methylnadic anhydride, dichloromaleic anhydride, maleic acid amide, itaconic acid, itaconic anhydride: natural fats and oils such as soybean oil, tung oil, caster oil, linseed oil, hempseed oil, cottonseed oil, sesame oil, rapeseed oil, peanut oil, camellia oil, olive oil, coconut oil, sardine oil; epoxided natural fats and oils; unsaturated carboxylic acid such as acrylic acid, butenoic acid, crotonic acid , vinyl acetic acid, methacrylic acid, pentenoic acid, angelic acid, tiglic acid, 2-pentenoic acid, 3-pentenoic acid, α-ethyl acrylic acid, β-methylcrotonic acid, 4-pentenoic acid, 2-hexenoic acid, 2-methyl-2-pentenoic acid, 3-methyl-2-pentenoic acid, α-ethylcrotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadeconoic acid, eicosenoic acid, docosenoic acid, erucic acid, tetracosenoic acid, mycolipenic acid, 2,4-pentadienic acid, 2,4-hexadienic acid, diallyl acetic acid, geranic acid, 2,4-decadienic acid, 2,4-dodecadienic acid, 9,12-hexadecadienic acid, 9,12-octadecadienic acid, hexadecatrienic acid, linoleic acid, linolenic acid, octadecatrienic acid, eicosadienic acid, eicosatrienic acid, eicosatetraenic acid, ricinoleic acid, eleostearic acid, oleic acid, eicosapentaenic acid, docosatrienic acid, docosapentaenic acid, tetracosenoic acid, hexacosenoic acid, hexacodienoic acid, octacosenoic acid, tetraaconitic acid and the like are enumerated.

Or esters of these unsaturated carboxylic acids, acid amides, anhydrides and unsaturated alcohols such as allyl alcohol, crotyl alcohol, methylvinyl carbinol, allyl carbinol, methyl propenyl carbinol, 4-penten-1-ol, 10-undecene-1-ol, propargyl alcohol, 1,3-pentadiene-3-ol, 1,4-hexadiene-3-ol, 3,5-hexadiene-2-ol, 2,4-hexadiene-1-ol, alcohol of the formula: CₙH₂ₙ₋₅OH, CₙH₂ₙ₋₇OH or CₙH₂ₙ₋₉OH (n is an integer), 3-butene-1,2-diol, 2,5-dimethyl-3-hexene-3,4-diol, 1,5-hexadiene-3,4-diol, or 2,6-octadiene-4,5-diol, and unsaturated amines wherein OH group of the unsaturated alcohol is replaced by -NH₂ group or glycidyl (meth)acrylate, allylglycidyl ether and the like are enumerated.

Furthermore, butadiene or isoprene oligomer (for example, average molecular weight is 500∼10000) or high molecular weight polymer (for example, its average molecular weight is 10000 or more ) to which maleic anhydride and phenols are added or compound to which amino group, carboxylic acid group, hydroxyl group, epoxy group and the like are introduced and allyl isocyanurate are enumerated.

In the definition of the compound of the present invention which has both unsaturated group and polar group in same molecule, a compound which contains two unsaturated group or more and two polar group (same kinds or different kinds) is also included and two or more kinds of specified compounds also can be used.

The details of these compounds are illustrated in Japanese Patent Publications (Koukai) NO. 56-26913 and NO. 56-49753.
Among these, maleic anhydride, maleic acid, fumaric acid, itaconic anhydride, glycidyl(meth)acrylate are preferred, and more preferably maleic anhydride and fumaric acid are used.

The mutual compatibilizer K group used in the present invention is prepared usually by the oxidation of polyolefin wax in air or suspension solution and polyethylene wax is most suitable.

The mutual compatibilizer L group used in the present invention is silane compound which contains both (1) at least one silicone atom which is linked with a carbon atom through oxygen and (2) at least one functional group selected from an ethylenic carbon-carbon double bond or carbon-carbon triple and/or an amino group and a mercapto group, and wherein the fore-mentioned functional group is not directly linked to silicon atom, and for example, γ-aminopropyltriethoxysilane and 2-(3-cyclo-hexyl)-ethyltrimethoxy silane are enumerated.

The mutual compatibilizer M group used in the invention is aliphatic polycarboxylic acid, its ester or its amide and a saturated aliphatic polycarboxylic acid and its derivatives which are represented by the general formula
(R₁O)ₘR(COOR₂)ₙ(CONR₃R₄)ₚ [wherein, R:a linear or a branching saturated aliphatic hydrocarbon having 2-20, preferably 2-10 carbon atoms, R₁:a hydrogen, an alkyl group, an aryl group, an acyl group, or a carbonyldioxy group and preferably a hydrogen, R₂: a hydrogen, an alkyl group, or an aryl group having up to 20, preferably 1-10 carbon atoms, R₃ and R₄: a hydrogen, an alkyl group or an aryl group having up to 10, preferably 1-6, more preferably 1-4 carbon atoms, m = 1 or 2 (n+p) : an integer of 2 or more, preferably 2 or 3, n: an integer of 0 or more, p: an integer of 0 or more, (R₁O) is situated at α position or β position to carbonyl group and wherein at least 2 to 6 carbon atoms exist between two carbonyl groups.

For example, esters, amides, anhydrides, hydrates, and salts of saturated aliphatic polycarboxylic acid are enumerated. As saturated aliphatic polycarboxylic acids, citric acid, malic acid, agaricic acid and the like are enumerated. The details of these compounds are illustrated in Japanese Patent Publication (Tokuhyosho) No. 61-502195.

The mutual compatibilizer N group used in the present invention is a compound represented by the general formula: (I)-Z-(II) [in the formula, (I) is at least one group having a formula: (X-CO)- (in the formula, X is a fluorine, a chlorine, a bromine, an iodine, hydroxyl group, OR₅ group, or -O-CO-R₅, and R₅ is a hydrogen, an alkyl group or an aryl group) and (II) is at least one selected from carboxylic acid group, anhydride group, acid amide, imide group, carboxylate group, amino group and hydroxyl group, and (I) group and (II) group are linked as covalent bonding with intervention of divalent hydrocarbon Z bonding].

For example, chloroformylsuccinic anhydride, chloroethanoyl-succinic anhydride, trimellitic anhydride acid chloride, trimellitic anhydride acetic anhydride, terephthalic acid chloride and the like are enumerated.

Examples of the mutual compatibilizer O group used in the present invention include for example, styrene-maleic anhydride copolymer resin and the like.

The mutual compatibilizer (C) of the present invention may be a compound which is used to improve the compatibility of (A) the polyphenylene ether resin and (B) the polyamide resin without restriction in compounds exemplified as I-Q and the mutual compatibilizers may be used alone or in combinations thereof. In the present invention, among these mutual compatibilizers, maleic anhydride is most preferred.

The blending amount of the mutual compatibilizer (C) is 0.01-30 parts by weight per 100 parts by weight of the sum of (A) the polyphenylene ether resin and (B) the polyamide resin.
When it exceeds 30 parts by weight, it is not preferred becuase strength decreases remarkably owing to the decrease of thermal resistance and decomposition. Preferable blending amount is 0.05-25 parts by weight. And when the mutual compatibilizers are blended, a radical initiator may be used at the same time.

The plasticizer (D) of the present invention which gives an elasticity to the polyamide is a compound which has an ability that flexural modulus of the polyamide is decreased to 90 % or less as compared with the case without the plasticizer when 10 parts by weight of the plasticizer per 100 parts by weight of the polyamide is blended.

The examples of a compound preferable as the plasticizer (D) which gives an elasticity to the polyamide are higher alcohols such as hexylene glycol and glycerine: hydroxybenzoic acid esters such as octyl p-hydroxybenzoate, 2-ethylhexyl p-hydroxybenzoate, heptyl p-hydroxybenzoate, 2-ethyldecyl p-hydroxybenzoate, 2-octyloctyl p-hydroxybenzoate and 2-decyldodecyl p-hydroxybenzoate: aromatic sulfonamides such as N-methylbenzene sulfonamide N-butyl-benzene sulfonamide, p-toluene sulfonamide, N-ethyl-p-toluene sulfonamide and N-cyclohexyl-p-toluene sulfonamide: phenols such as β-naphthol, dibenzylphenol and octylcresol are not restricted to them.

The more preferable plasticizer is a plasticizer which has the ability that the flexural modulus of the polyamide blended with the plasticizer is decreased to 70 % or less of that of the polyamide without the plasticizer when 10 parts by weight of the plasticizer per 100 parts by weight of the polyamide. The more preferable plasticizers are benzene sulfonamides and hydroxybenzoates, and the most preferable plasticizers are esters of p-hydroxybenzoic acid or o-hydroxybenzoic acid with alcohols having 12-30 carbon atoms. Esters of p-hydroxybenzoic acid or o-hydroxybenzoic acid with alcohols having 12-30 carbon atoms have an excellent compatibility with the polyamide resin and give little of tack derived from bleeding on the surface of moldings from the inside of them, and at high temperature of compounding of the resin composition it is low volatile and has an excellent plasticizing effect. On the other hand esters with alcohols having 11 or less carbon atoms as raw materials has the defect of high volatility and esters with alcohols having 31 or more carbon atoms as raw materials are low volatile but insufficient in plasticizing effect. Ester of p-hydroxy-benzoic acid or o-hydroxybenzoic acid with branching alcohol having 12-30 carbon atoms is most preferred and has the excellent balance of the fore-mentioned low volatility, bleeding property and plasticizing effect.

The blending amount of the plasticizer is 0.1-100 parts by weight per 100 parts by weight of the sum of the PPE and the polyamide resin. When the blending amount is 0.1 or less parts by weight, the effect of giving an elasticity is low and when the blending amout is 100 or more parts by weight, it is not preferred owing to the remarkable decrease of tensile strength. The more preferable amount is 0.1-70 parts by weight per 100 parts by weight of the sum of the PPE and the polyamide resin. The most preferable amount is 0.5-40 parts by weight per 100 parts by weight of the sum of the PPE and the polyamide resin.

A rubber-like material (E) of the present invention is natural or synthetic polymer material which is an elastomer at room temperature and used for the improvement of impact resistance.
For example, ethylene-propylene copolymer rubber, ethylene-propylene-non-conjugated diene copolymer rubber, ethylene-butene-1 copolymer rubber. ethylene- α, β-unsaturated carboxylic acid alkyl ester-maleic anhydride copolymer, polybutadiene, styrene-butadiene block copolymer rubber, styrene-butadiene-styrene block copolymer, styrene-butadiene random copolymer rubber, partially-hydrogenated styrene-butadiene random copolymer rubber, styrene-isoprene block copolymer rubber, partially-hydrogenated styrene-isoprene block copolymer rubber, polyurethane rubber, styrene-grafted ethylene-propylene-non-conjugated copolymer rubber, styrene-grafted ethylene-propylene copolymer rubber, styrene/acrylonitrile-grafted ethylene-propylene copolymer rubber, or in combinations thereof are used but it is not restricted to these examples. Furthermore, a modified rubber which is modified by functional monomer which contains other acid or epoxy group.

The blending amount of (E) the rubber-like material is 0-100 parts by weight, preferably 0-50 parts by weight per 100 parts by weight of the sum of (A) the polyphenylene ether resin and (B) the polyamide resin. When the amount of the rubber-like material exceeds 100 parts by weight, it is not preferred because the rigidity of the resin compound decreases remarkably.

As a preparing method of the thermoplastic resin composition of the present invention, various methods such as solution-blending and melt-kneading are applicable, but melt-kneading is preferred. As melt-kneading, after abovementioned components are homogeneously blended by mixing methods such as Henschel mixer, super mixer, ribbon-blender and V-blender, which are used for blending of resins or blending of resin with liquid or solid additives, the mixture was blended by melt-kneading methods such as Bunbury mixer, plastmill, Brabender-plastgraph and single-screw or twin-screw extruder.
The temperature of melt-kneading is selected from the range of 120 to 140 °C, preferably 200 to 350 °C.

When the melt-kneading method is applied for preparing the thermoplastic resin composition of the present invention, any orders of kneading of each component is used.
For example, when the mixture is melt kneaded by extruder, all combinations may be kneaded after blending any combinations of each component separately, or one or more components may be fed in order through the feeding-inlets of an extruder which has multi feeding-inlets.

That is, a method wherein the components (A)-(D), and if necessary, the component (E) are added all at once and melt-kneaded at the same time: a method wherein the component (A) and the component (C) are melt-kneaded in advance with or without radical initiator and the component (B) and the component (D) are added additionally and melt-kneaded: a method wherein the component (A), the component (C) and the component (E) are melt-kneaded in advance with or without radical initiator and the component (B) and the component (D) are added additionally and melt-kneaded: a method wherein the component (A), the component (C) and the component (E) are melt-kneaded in advance, and the component (B) is added additionally and melt kneaded to obtain pellets, and after mixing of said pellets and the component (D), the mixture is melt-kneaded again: a method wherein the component (A), the component (D) and the component (C) are melt-kneaded in advance, and the component (B) and the component (E) are added additionally and melt kneaded: and the like may be used but it is preferred that the component (A) the polyphenylene ether resin and the component (C) the mutual compatibilizer are melt-kneaded at least before the component (B) the polyamide resin is kneaded.

The resin composition of the present invention can contain substances in addition to fore-mentioned ones if necessary. As these substances, a lubricant, an improving agent for weather resistance, an improving agent for thermal resistance, a flame retardant, a coloring agent, an electro-conductive filler such as carbon black and stainless fiber and an organic or inorganic filler for reinforcement can be blended.

The examples of the flame retardant include esters of phosphoric acid exemplified by triphenyl phosphate, tricresyl phosphate, phosphates obtained from the mixture of isopropyl phenol and phenol,and phosphates obtained from the mixture of bifunctional phenol such as benzohydroquinone or bisphenol A, with other alcohols or phenols : bromide compounds exemplified by decabromobiphenyl, pentabromotoluene, decabromo diphenyl ether, hexabromobenzene, broninated polystyrene, brominated epoxy and brominated polyphenylene ether; antimony flame retarding co-agent, nitrogen-containing compound such as melamine and melamine triisocyanurate: red phosphorus.

As examples of stabilizer and so on, steric-hindered phenols, organic phosphites, oxalic diazides, steric-hindered amines, and as examples of lubricants, polyethylene waxes and paraffins are enumerated. The blending amount of above-mentioned other substances may be selected according to their purposes.

As examples of uses for the thermoplastic resin composition of the present invention, pipes for pressure-transfer, various flexible tubes and the like are mentioned.

### EXAMPLE

The present invention is described in detail by way of Examples as follows, but the range of the present invention is not restricted by these Examples. The meanings of abbreviations which appear in Examples and Comparative Examples are illustrated as follows.
PPE: Poly(2,6-dimethyl-1,4-phenylene ether) with an intrinsic viscosity of 0.46 dl/g which is measured in chloroform at 30°C.
PA: Polyamide-12 (with weight-average molecular weight of 24000 converted from PMMA by GPC method.)
SBS: Styrene-butadiene-styrene · triblock coploymer
(CARIFLEX TR1101 manufactured by Shell Chemical Company LTD.)
MAH: Maleic anhydride as the mutual compatibilizer.
Plasticizer 1: Butylbenzenesulfonamide.
Plasticizer 2: 2-ethylhexyl p-hydroxybenzoate.
Plasticizer 3: 2-octyloctyl p-hydroxybenzoate.
Plasticizer 4: 2-decyltetradecyl p-hydroxybenzoate.

The measurement of properties were performed as follows. Test pieces for the measurement of tensile test, flexural test and Izod impact strength with notch were made by injection molding. Tensile test according to the method of ASTM D638, flexural test according to the meathod of ASTM D790 and Izod impact test with notch according to the method of ASTM D256 were measured. Melt flow rate (MFR) was measured at loading of 2.16 kg/cm² at 280°C according to the method of JIS K7210.

Tensile dumbbells obtained by injection molding were left for 72 hours in a hot oven at 100 °C the volatility of a plasticizer was evaluated by the weight change ratio of dumbbells. And a bleeding property of the plasticizer on the surface of the moldings was measured by the observation by eyes of the surface of tensile dumbbells left for one week in a hot oven at 100 °C.

### Example 1

50 parts by weight of PPE and 0.5 parts by weight of MAH were fed into the first hopper of the twin-screw continuous kneader (TEM-50 manufactured by Toshiba Machine Company LTD.) and 50 parts by weight of PA was fed by using of the weigh feeder into the second hopper equipped between the first hopper and the vent hole and 11 part by weight of plasticizer 1 was fed into the vent hole by using of an equipment for addition of liquid. A thermoplastic resin composition was obtained by being melt-kneaded and pelletized at screw rotation numbers of 330rpm with cylinder temperature setted at 260°C. Test pieces of the thus-obtained composition were made by injection molding at 240°C and the evaluation of properties were performed. The results of the measurement of properties were shown in Table 1.

### Example 2

A thermoplastic resin composition was obtained by the same pelletizing method which was performed as in Example 1 except that, instead of 11 parts by weight of the plasticizer 1, 5 parts by weight of the plasticizer 3 and 5 parts by weight of SBS were fed into the second hopper together with 50 parts by weight of PA. And test pieces were made and the evaluation of properties were performed by the same method as in Example 1. Results were shown in Table 1.

### Comparative Example 1

50 parts by weight of PPE and 0.5 parts by weight of MAH were fed into the first hopper of the twin-screw continuous kneader (TEM-50 manufactured by Toshiba Machine Company LTD.) and 50 parts by weight of PA was fed by using of the weigh feeder into the second hopper equipped between the first hopper and the vent hole and pelletized and the measurement of properties were performed with the same condition as in Example 1. Results were shown in Table 1.

### Comparative Example 2

It was pelletized with the same condition as in Example 1 except that, instead of the plasticizer 1 in Example 1, 11 parts by weight of SBS was fed into the second hopper together with PA and the mesurement of properties were performed. The results of the measurement of properties were shown in Table 1.

### Examples 3-7

It was pelletized with the same condition as in Example 1 except that, instead of the plasticizer 1 of Example 1, the plasticizers 2-4 were blended with a composition shown in Table 2, and the evaluation of properties were performed. Results of the measurement of properties were shown in Table 2.

According to the present invention, a PPE/polyamide resin composition having an excellent balance in low elasticity, high tensile strength, high impact strength and an excellent processability can be provided.

**[Table 1]**

| | Unit | Example 1 | Example 2 | Comparative Example 1 | Comparative Example 2 |
|---|---|---|---|---|---|
| PPE | parts/weight | 50 | 50 | 50 | 50 |
| MAH | parts/weight | 0.5 | 0.5 | 0.5 | 0.5 |
| PA | parts/weight | 50 | 50 | 50 | 50 |
| Plasticizer 1 | parts/weight | 11 | - | - | - |
| Plasticizer 3 | parts/weight | - | 5 | - | - |
| SBS | parts/weight | - | 5 | - | 11 |
| Evaporated amount of plasticizer | % | 3.4 | 0.2 | 0 | 0 |
| Bleeding condition at surface | - | non | non | non | non |
| MFR | g/10min. | 37 | 11 | 6.5 | 4.7 |
| Flexural modulus | kg/cm² | 8200 | 11000 | 22000 | 15000 |
| Tensile strength | kg/cm² | 520 | 510 | 540 | 370 |
| Tensile elongation | % | 130 | 160 | 70 | 110 |
| Izod impact strength | kgcm/cm | 40 | 22 | 6 | 48 |

**[Table 2]**

| | Unit | Example 3 | Example 4 | Example 5 | Example 6 | Example 7 |
|---|---|---|---|---|---|---|
| PPE | parts/weight | 50 | 50 | 50 | 50 | 50 |
| MAH | parts/weight | 0.5 | 0.5 | 0.5 | 0.5 | 0.5 |
| PA | parts/weight | 50 | 50 | 50 | 50 | 50 |
| Plasticizer 2 | parts/weight | 11 | - | - | - | - |
| Plasticizer 3 | parts/weight | - | 5 | 11 | 25 | - |
| Plasticizer 4 | parts/weight | - | - | - | - | 11 |
| Evaporated amount of plasticizer | % | 3.1 | 0.2 | 0.3 | 0.4 | 0.2 |
| Bleeding condition | - | exist | non | non | non | exist |
| MFR | g/10min. | 15 | 13 | 40 | 220 | 18 |
| Flexural modulus | kg/cm | 14200 | 13800 | 7900 | 3300 | 15200 |
| Tensile strength | kg/cm | 560 | 550 | 500 | 350 | 550 |
| Tensile elongation | % | 140 | 150 | 130 | 120 | 120 |
| Izod impact strength | kgcm/cm | 9 | 7 | 48 | 32 | 6 |

## Claims

1. A thermoplastic resin composition comprising (A) 5-90 parts by weight of a polyphenylene ether resin and (B) 95-10 parts by weight of a polyamide resin, and per 100 parts by weight of the sum of (A) and (B), (C) 0.01-30 parts by weight of a mutual compatibilizer, (D) 0.1-100 parts by weight of a plasticizer which gives elasticity to the polyamide and (E) 0-100 parts by weight of a rubber-like material.

2. A thermoplastic resin composition according to claim 1, wherein the mutual compatibilizer (C) is at least one compound selected from the following groups I to Q:
I : an epoxy compound without an ethylenic or acetylenic unsaturated double bond;
J : a compound with (1) at least one unsaturated group having a carbon-carbon double bond or carbon-carbon triple bond and (2) at least one polar group;
K : an oxidized polyolefin wax;
L : a silane compound which comprises both (i) a carbon linked to silicon through oxygen and (ii) at least one functional group selected from an ethylenic carbon-carbon double bond or carbon-carbon triple bond and/or an amino group and a mercapto group, and wherein the functional group is not linked to he silicon atom in the molecular structure;
M : a compound which comprises both (i) a group OR (wherein R is a hydrogen or an alkyl group, an aryl group, an acyl group or a carbonyldioxy group) and (ii) at least two identical or different functional groups in the same molecule selected from carboxylic acid, acid halide, acid anhydride, acid ester, acid amide, imide, amino or a salt thereof;
N : a compound which has both (i) acid halide group and (ii) at least one group selected from a carboxylic acid group, anhydride group, acid amide, imide group, carboxylate group, amino group and hydroxyl group in the same molecule;
O : a copolymer which contains a vinyl aromatic compound moiety and α,β-unsaturated dicarboxylic acid or its anhydride, or a copolymer which contains the vinyl aromatic compound moiety and the imide of α,β-unsaturated dicarboxylic acid moiety;
P : a polyphenylene ether functionalized by at least one mutual compatibilizer selected from groups I-J and groups L-N;
Q : a composition obtained by melt kneading a small amount of polyamide with a polyphenylene ether functionalized by at least one mutual compatibilizer selected from groups I-O.

3. A thermoplastic resin composition according to claim 1 or 2, wherein the plasticizer (D) which gives elasticity to the polyamide is a compound which, when the polyamide comprises 10 parts by weight of plasticizer per 100 parts by weight of polyamide, reduces the flexural modulus of the polyamide to 90% or less of the flexural modulus without the plasticizer.

4. A thermoplastic resin composition according to claim 1, 2 or 3 wherein the plasticiser (D) which gives elasticity to the polyamide is a compound which, when the polyamide comprises 10 parts by weight of plasticizer per 100 parts by weight of polyamide, reduces the flexural modulus of the polyamide to 70% or less of the flexural modulus without the plasticizer.

5. A thermoplastic resin composition according to any one of the preceding claims, wherein the plasticizer (D) comprises a higher alcohol, hydroxybenzoic acid, aromatic sulfonamide or phenol.

6. A thermoplastic resin composition according to any one of claims 1 to 4 wherein the plasticizer (D) comprises an ester of a p-hydroxybenzoic acid or o-hydroxybenzoic acid with an alcohol having 12-30 carbon atoms.

7. A thermoplastic resin composition according to any one of the preceding claims, wherein the rubber-like material (E) is a natural or synthetic polymer material which is an elastomer at room temperature.
